Europäisches Patentamt

European Patent Office

Office européen des brevets

(19)

(11) **EP 0 536 686 B1**

(12) **EUROPÄISCHE PATENTSCHRIFT**

(45) Veröffentlichungstag und Bekanntmachung des Hinweises auf die Patenterteilung:
**22.05.1996 Patentblatt 1996/21**

(51) Int. Cl.$^6$: **B26D 5/00**, B41L 1/32, B23K 26/02

(21) Anmeldenummer: 92117019.7

(22) Anmeldetag: **06.10.1992**

(54) **Materialangepasste perforierte Endlosformulare sowie Vorrichtung und Verfahren zu deren Herstellung**

Multipart business form with perforations adapted to material quality, apparatus and method for making the same

Bande de formulaires ayant une perforation adaptée à la qualité du matériel, appareil et méthode pour sa fabrication

(84) Benannte Vertragsstaaten:
**AT BE CH DE DK ES FR GB IT LI NL SE**

(30) Priorität: **08.10.1991 DE 4133348**

(43) Veröffentlichungstag der Anmeldung:
**14.04.1993 Patentblatt 1993/15**

(73) Patentinhaber: **Zweckform Büro-Produkte GmbH D-83602 Holzkirchen (DE)**

(72) Erfinder:
• **Zschaeck, Michael**
  **W-8000 München 70 (DE)**

• **Steinbeis, Michael**
  **W-8204 Brannenburg (DE)**

(74) Vertreter: **Ritter und Edler von Fischern, Bernhard,Dipl.-Ing. et al Hoffmann, Eitle & Partner, Patentanwälte, Postfach 81 04 20 81904 München (DE)**

(56) Entgegenhaltungen:
**US-A- 5 028 040**

## Beschreibung

Die Erfindung betrifft Endlosformulare mit zumindest Querperforationen und ein Verfahren zu deren Herstellung.

Endlosformulare für EDV-Ausdrucke sind quer- und längsperforiert, um einerseits eine Faltung der Papierbahn für die Ablage der Formulare in einem Stapel und andererseits eine Trennung der einzelnen Formulare voneinander und von überflüssigen Formularbestandteilen, z.B. Transportändern zu ermöglichen, An die Perforationen werden daher zwei grundsätzlich entgegengesetzte Anforderungen gestellt. Denn zum einen ist für die Bearbeitung der Formulare in einem kontinuierlichen Prozeß ein abrißfreier Lauf durch die Bearbeitungsanlagen, z.B. einen Drucker zu gewährleisten; zum anderen darf aber eine zuverlässige, teilweise auch automatisch erfolgende Trennung der Formulare nicht unnötig erschwert oder gar unmöglich gemacht wrid. Der Widerstand, den die Perforation dem Einreißen bzw. dem Weiterreißen entgegensetzt, d.h. die Festigkeit der Perforation - im folgenden Perforationsfestigkeit - darf angesichts dessen nur in möglichst engen Grenzen schwanken.

Die Perforation, insbesondere die Querperforation einer Papierbahn werden bislang bei der Herstellung mit Hilfe von Messerwalzen in das Papier eingebracht. Dabei sind auf einer Messerwalze eine oder mehrere Messerreihen so angeordnet, daß von den Messern auf der rotierenden Messerwalze das Papier in regelmäßigen Abständen durchschnitten und so die Perforation eingebracht wird.

Bei Endlosformularen basiert die Perforationsfestigkeit, die beim Einbringen einer Perforation in eine Papierbahn erzielt wird, auf den Papiereigenschaften bzw. der Papierbeschaffenheit und auf der Qualität der Perforation selbst, d.h. letztlich auf der Qualität der Perforationsvorrichtung. In Bezug auf die herkömmliche Perforationsvorrichtung kommt der Güte und dem Abnutzungsgrad der Perforationsmesser und der Präzision der Einstellung der Messerwalze eine entscheidende Bedeutung zu. Bei den Papiereigenschaften ist insbesondere die Längsbruchlast als ausschlaggebende Größe zu nennen, die auf die erzielte Perforationsfestigkeit einen entscheidenden Einfluß ausübt. Schwankungen in diesen Bereichen führen unweigerlich zu einer Schwankung der Perforationsfestigkeit.

Die Bruchkraft von Papier kann nach bekannten Meßmethoden, etwa nach DIN 53112 ermittelt werden. Für die nicht zerstärungsfreie Messung der Perforationsfestigkeit kann ein Perforationsmeßgerät nach dem System FOGRA (Deutsche Forschungsgesellschaft für Druck- und Reproduktionstechniken e.V.) verwendet werden.

In diesem Zusammenhang ist festzustellen, daß ausgehend von einer durch das Papier vorgegebenen Festigkeit eine Verschlechterung eintritt, wenn die Perforation in das Papier eingebracht wird. Denn für den Variationskoeffizient der Längsbruchlast des verwendeten Papiers werden bei modernen Papierqualitäten Werte von 3% bis 4% erzielt; diese Werte werden durch das Einbringen der Perforation auf über 15% verschlechtert. Das bedeutet, daß die Schwankungen um einen gewünschten Wert für die Perforationsfestigkeit nach dem Einbringen der Perforation erheblich größer sind, als dies durch die Schwankungen der Papiereigenschaften tatsächlich erforderlich wäre. Mit anderen Worten werden Fortschritte, die bei der Herstellung von Papier im Hinblick auf eine Vergleichmäßigung der Eigenschaften und einen Abbau von Schwankungen der Beschaffenheit in den letzten Jahren erreicht wurden, bei den bisher bekannten Verfahren und Vorrichtungen zur Einbringung der Perforation im wesentlichen zunichte gemacht.

Die Hersteller von Maschinen für die Verarbeitung von Endlosformularen, einschließlich der Nachverarbeitungsmaschinen geben Wertebereiche für die Perforationsfestigkeit an, die zweckmäßigerweise vom Benutzer einzuhalten sind, um einen optimalen Durchlauf durch die Maschine und eine gute Ablage der Endlosformulare im Stapler sicherzustellen. Ein Unterschreiten des unteren Grenzwertes kann zu Papierabrissen während der Verarbeitung führen; bei einem Überschreiten des oberen Grenzwertes können Ablageschwierigkeiten oder Versagen beim Trennen der Formulare auftreten. Angesichts der oben erwähnten Schwankungen und der Probleme bei der Herstellung sind die Wertebereiche in den meisten Fällen sehr breit und erlauben Abweichungen von bis zu ± 20% von einem mittleren Wert. Engere Toleranzen hinsichtlich der Perforationsfestigkeit sind aber wünschenswert, da auf diese Weise höhere Verarbeitungsgeschwindigkeiten und qualitativ bessere Produkte mit entsprechend konstruierten Verarbeitungsmaschinen wie etwa Hochleistungsdruckern möglich wären bzw. die Fehlerquote aufgrund von Papierabrissen oder Ablagefehlern bei herkömmlichen Anlagen zu senken wäre.

Der Erfindung liegt daher die Aufgabe zugrunde, neuartige Endlosformulare zu schaffen, die im Hinblick auf deren Einsetzbarkeit in Verarbeitungsmaschinen für Endlosformulare besonders günstige Eigenschaften aufweisen. Insbesondere sollen die Endlosformulare eine verbesserte Perforationsfestigkeit besitzen, die sie für diesen Einsatz hervorragend geeignet sein läßt. Ferner ist die Erfindung auf die Angabe eines Verfahren zur Herstellung derartiger Endlosformulare gerichtet.

Gelöst wird die zuvor genannte Aufgabe durch die Schaffung von Endlosformularen mit Perforationen mit den Merkmkalen des Patentanspruchs 1. Dabei ist die Perforation in kontinuierlicher Abhängigkeit von den Eigenschaften des Papiers eingebracht, so daß der Variationskoeffizient der Perforationsfestigkeit unter einem vorgegebenen Grenzwert, vorzugsweise unter 6% liegt. In einer besonders vorteilhaften Ausgestaltung liegt der Variationskoeffizient unter 4%.

Ferner wird die Aufgabe gelöst durch ein Verfahren zur Herstellung der Endlosformulare gemäß Patentanspruch 5.

Die Erfindung beruht auf der Erkenntnis, daß bei gleichen Papieren ein Faserbruch im wesentlichen immer nach der gleichen Dehnungsstrecke einsetzt; das bedeutet, daß sich gleichausgestattete Papiere hinsichtlich der Grenzen ihrer irreversiblen Verformung im wesentlichen gleich verhalten. Unter gleichausgestatteten Papieren werden solche verstanden, die gleiches Flächengewicht und gleiche Ausstattung bei der Herstellung bezüglich Leimung, Fasergröße, Faserorientierung und Feststoffgehalt aufweisen.

Im folgenden wird die Erfindung unter Bezugnahme auf die Zeichnungen genauer beschrieben, in denen zeigt:

Fig. 1          eine Meßvorrichtung für die Herstellung materialangepaßt perforierter Endformulare gem. der Erfindung,

Fig. 2A, 2B, 2C      verschiedene Perforationsspalte und die korrespondierenden Detektorsignale,

Fig. 3          eine Vorrichtung zur Herstellung von materialangepaßt perforierten Endlosformularen und

Fig. 4          eine Laservorrichtung zur Herstellung von materialangepaßt perforierten Endlosformularen,

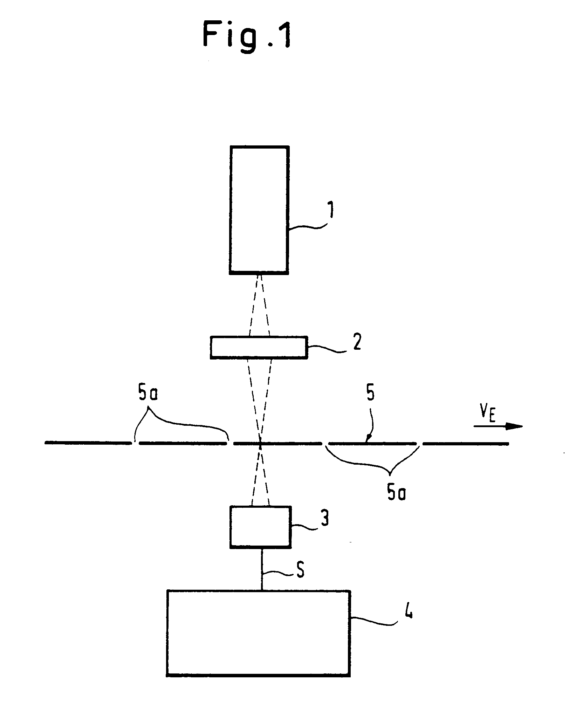

Im folgenden wird zunächst anhand von Fig. 1 eine Meßvorrichtung beschrieben, mit der die Qualität der Perforation erfaßt und die erzielte Perforationsfestigkeit bestimmt wird; über die Meßvorrichtung erfolgt die Einbeziehung der Eigenschaften des Papiers in den Herstellungsprozeß.

Die Meßvorrichtung umfaßt eine Lichtquelle 1, vorzugsweise eine niederenergetische Laserlichtquelle, z.B. Laserdioden mit 3 bis 5 mW Leistung, eine optische Einrichtung 2 zur Bündelung des von der Lichtquelle ausgehenden Lichts, eine Detektoreinrichtung 3 zur Aufnahme des Lichts und zur Abgabe eines Detektorsignals S und eine Auswerteeinrichtung 4 zur Auswertung des Detektorsignals.

In Fig. 1 sind ferner Endlosformulare 5 mit Perforationsspalten 5a in einer Ansicht quer zur Laufrichtung (Pfeil) der Endlosformulare dargestellt. Die optische Einrichtung 2 bündelt das Licht von der Lichtquelle 1 derart, daß in der Ebene der Endlosformulare der Lichtfleck mit dem kleinsten Durchmesser erzeugt wird. Vorzugsweise verläuft das Licht senkrecht zur Ebene der Endlosformulare.

Das Licht durchdringt die Endlosformulare 5 nicht oder vorzugsweise nur so geringfügig, daß es beim Erreichen der Detektoreinrichtung 3 nur ein geringes Detektorsignal S hervorruft, das als Grundsignal genutzt werden kann; bleibt dieses Grundsignal aus, kann auf einfache Weise ein Fehler in der Meßvorrichtung erkannt werden.

Werden die Endlosformulare 5 in Richtung des Pfeils $V_E$ in Fig. 1 bewegt, tritt das Licht an den Stellen der Perforationsspalte 5a durch die Endlosformulare hindurch, gelangt zur Detektoreinrichtung 3 und ruft ein charakteristisches Detektorsignal S hervor, das an die Auswerteeinrichtung 4 weitergeleitet wird. Die Größe und Art des Detektorsignals wird von der Auswerteeinrichtung 4 zur Überprüfung der Perforationsspalte 5a und damit zur Bestimmung der Perforationsfestigkeit ausgewertet. Das Detektorsignal S besitzt die im folgenden beschriebene Abhängigkeit von den Perforationsspalten 5a, die mit Hilfe vergleichender Versuche auf der Grundlage von mikroskopischen Beurteilungen und Perforationsfestigkeitsmessungen - unter Zerstörung der Perforation - ermittelt wurde.

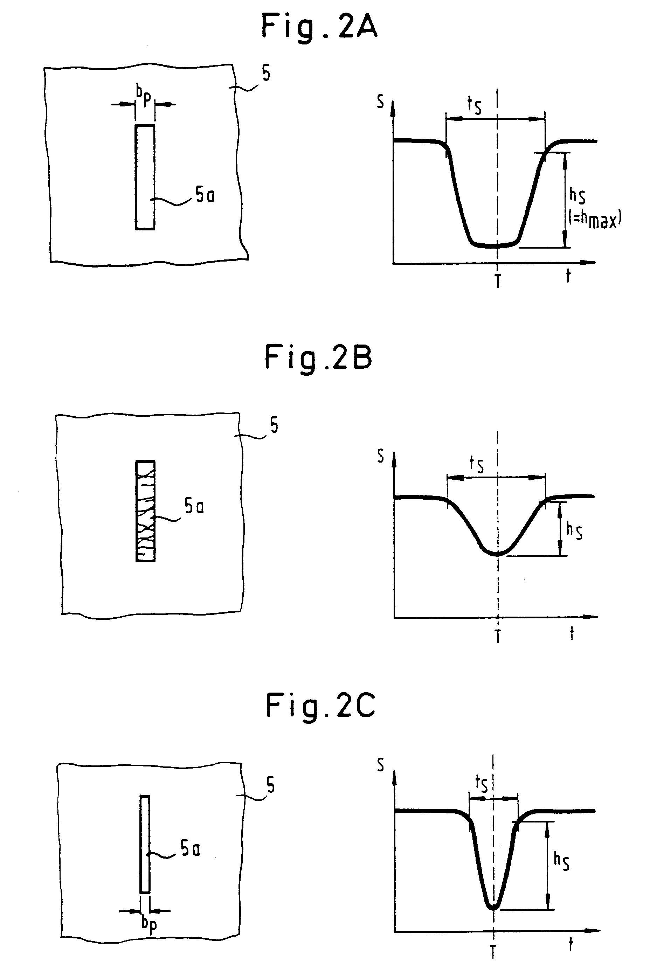

In den Fig. 2A bis 2C sind zur Erläuterung dieser Abhängigkeit des Detektorsignals beispielhafte Perforationsspalte 5a in Endlosformularen 5 in vergrößerter Darstellung, sowie in S/t-Diagrammen die entsprechenden Detektorsignale S gezeigt, die von dem durch die Perforationsspalte hindurchtretenden Licht hervorgerufen werden. Nach Einbringen des Perforationsschnittes bildet sich aufgrund der bei der Bearbeitung der Papierbahn vorhandenen Spannung ein Perforationsspalt mit einer bestimmten Perforationsspaltbreite aus, die von den Papiereigenschaften, der vorhandenen Papierbahnspannung und dem Schnitt/Steg-Verhältnis der Perforation abhängt. Die Perforationsfestigkeit korreliert zur Breite des Perforationsspaltes, denn die Breite zeigt an, wie weit das Papier unter der aufgebrachten Belastung von der Bruchgrenze entfernt ist. Denn durch die Einbringung der Perforation findet eine Schwächung des tragenden Papierquerschnittes statt, so daß die Papierbahnspannung zu einer Dehnung des Papiers in den tragenden Stegen der Perforation führt. Das bedeutet, daß die Breite der Perforationsspalte anzeigt, wieviel Kraft noch aufgenommen werden muß, um das Papier zu reißen, so daß ausgehend von der bekannten Bahnspannung die Kraft bestimmt werden kann, die zum Zerreißen der Perforation letztlich noch erforderlich ist. Das bedeutet aber, daß die Perforationsfestigkeit auf der Grundlage der Breite der Perforationsspalte ermittelt werden kann. Auf diese Weise werden die Papiereigenschaften in die Messung und die Beurteilung der Perforationsfestigkeit einbezogen.

In Fig. 2A ist ein erster Perforationsspalt 5a dargestellt; anhand des S/t-Diagramms in Fig. 2A wird das durch diesen Perforationsspalt erzeugte Detektorsignal S erläutert. Der Perforationsspalt 5a besitzt eine Breite $b_P$ und korreliert bei einer vorgegebenen Papierqualität und einem vorgegebenen Schnitt/Steg-Verhältnis der Perforation zu einer bestimmten Perforationsfestigkeit. Bei dem Perforationsspalt 5a sind im Inneren keine Papierfasern mehr vorhanden, die die beiden Längsseiten des Perforationsspaltes mit einander verbinden oder in den Perforationsspalt hineinstehen, da beim Einbringen der Perforation das Papier sauber durchtrennt wurde. Die Bruchkraft des Papiers und das Schnitt/Steg-Verhältnis der Perforation bestimmen bei einem derart eingebrachten Peforationsspalt die Perforationfestigkeit.

Gelangt der Perforationsspalt 5a gem. Fig. 2A in den Bereich des Lichtweges der Meßvorrichtung gem. Fig. 1, tritt das Licht durch die Ebene der Papierbahn hindurch und erreicht die Detektoreinrichtung 3. Aufgrund des auftreffenden Lichts erzeugt die Detektoreinrichtung 3 ein Detektorsignal S, dessen Verlauf über der Zeit in dem S/t-Diagramm in Fig. 2A dargetellt ist. Das Detektorsignal S wird im wesentlichen durch die beiden Größen $t_S$ und $h_S$, d.h. die Signaldauer und den Signalhub charakterisiert.

Die Signaldauer $t_S$ richtet sich nach der Breite $b_P$ des Perforationsspaltes 5a und der Geschwindigkeit $V_E$, mit der die Endlosformulare 5 in der Richtung des Pfeiles in Fig. 1 bewegt werden. Da die Bewegungsgeschwindigkeit $V_E$ der Endlosformulare bei der Herstellung bekannt ist oder aber zumindest auf einfache Weise mit Hilfe einer geeigneten Meßeinrichtung zu erfassen ist, kann die Signaldauer $t_S$ zur Ermittlung der Breite $b_P$ des Perforationsspaltes 5a herangezogen werden. Denn die Breite $b_P$ des in die Papierbahn eingebrachten Perforationsspaltes 5a wird über die Beziehung $b_P = t_S \times V_E$ bestimmt. Die Breite $b_P$ korreliert mit der Perforationsfestigkeit, ausgehend von einer gleichbleibenden Bahnspannung der Endlosformulare und einer gleichen Ausstattung des Papiers. Bei den vergleichenden Untersuchungen wurde aber festgestellt, daß Änderungen der Papiereigenschaften in den Punkten Faserlänge, Faserorientierung und Flächengewicht keinen Einfluß auf diesen Zusammenhang zwischen der Breite $b_P$ und der Perforationsfestigkeit haben. Die Breite $b_P$ zeigt daher an, wie weit das Papier unter der aufgebrachten Belastung von der Bruchgrenze entfernt ist, mit anderen Worten, wieviel Kraft noch aufgenommen werden muß, um das Papier zu reißen.

Der Signalhub $h_S$ erlaubt eine Aussage über die Güte des Perforationsspaltes, da nur für den Fall, daß sämtliche Papierfasern im Bereich des Schnittes durchtrennt wurden, der in Fig. 2A gezeigte maximale Signalhub $h_S = h_{max}$ erreicht wird. Je mehr Fasern in den Perforationsspalt hineinstehen, umso geringer ist der Signalhub $h_S$ des Detektorsignals. Der Signalhub $h_S$ führt daher zu einer eindeutigen Aussage über die Güte des Schnittes, mit dem die Perforation in das Papier eingebracht wurde, bzw. über die Perforation selbst.

Der maximale Signalhub $h_{max}$ hängt grundsätzlich aber auch davon ab, ob der Lichtfleck in der Ebene der Endlosformulare 5 eine Größe besitzt, die es gestattet, daß die gesamte Lichtmenge durch den Perforationsspalt 5a der Breite $b_P$ hindurchtritt, ohne daß ein Teil des Lichts von den Längsseiten des Perforationsspalts abgeschattet wird. Die gesamte Lichtmenge kann nur durch den Perforationsspalt 5a hindurchtreten, wenn der Durchmesser des in der Ebene der Endlosformulare 5 (vgl. Fig. 1) fokussierten Lichtflecks kleiner ist als die Breite $b_P$ des Perforationsspalts, da anderenfalls der Lichtfleck bei seiner Bewegung über den Perforationsspalt von den Längskanten des Perforationsspalts stets teilweise abgedeckt wird, ohne jemals ganz innerhalb des Spalts zu liegen. Daher ist vorzugsweise sowohl die Lichtquelle als auch die optische Einrichtung so auszugestalten, daß ein möglichst kleiner, exakt fokussierter Lichtfleck in der Ebene der Endlosformulare erzielt wird.

In Fig. 2B ist ein zweiter Perforationsspalt 5a im Endlosformular 5 dargestellt, bei dem nicht alle Papierfasern während des Einbringens der Perforation in die Papierbahn im Bereich des Perforationsspalts 5a durchtrennt wurden. Die Breite $b_P$ entspricht aber dem vorgegebenen Wert und damit der Breite des Perforationsspalts in Fig 2A. Hinsichtlich der Signaldauer $t_S$ unterscheidet sich das Detektorsignal S, das durch den Perforationsspalt gem. Fig. 2B hervorgerufen wird, nicht von dem des Perforationsspalts gem. Fig. 2A. Im Gegensatz dazu ist aber der Signalhub $h_S$ im Fall des Perforationsspalts gem. Fig. 2B deutlich geringer, was auf die das Hindurchtreten des Lichts behindernde Wirkung der stehengebliebenen Papierfasern im Perforationsspalt 5a zurückgeht. Somit kann eine mangelhafte Durchtrennung und Beseitigung der Papierfasern im Perforationsspalt 5a über den Signalhub $h_S$ erfaßt werden.

In Fig. 2C ist Schließlich ein dritter Perforationsspalt 5a gezeigt, bei dem zwar keine Papierfasern mehr im Inneren vorhanden sind, da alle Fasern durchgetrennt wurden, bei dem aber die Breite $b_P$ deutlich kleiner ist als bei den Perforationsspalten gem. Fig. 2A oder 2B. Die kleinere Breite $b_P$ des dritten Perforationsspalts 5a zeigt an, daß sich das Papier unter der aufgebrachten Bahnspannung nicht so stark gedehnt hat, wie in den Fällen, die in Fig. 2A und 2B dargestellt sind. Das bedeutet aber gleichzeitig, daß die Kraft, die noch aufzubringen ist, um das Papier an der Perforation zu zerreißen, im Fall von Fig. 2C größer ist als in den beiden anderen Fällen. Mit anderen Worten ist die Perforationsfestigkeit bei einer Perforation gem. Fig. 2C größer. Die Signaldauer $t_S$ des Detektorsignals, das von dem Perforationsspalt 5a gem. Fig. 2C hervorgerufen wird, verkürzt sich dementsprechend im Vergleich mit den Detektorsignalen gem. Fig. 2A oder 2B. Der Signalhub $h_S$ bleibt aber unverändert groß, da keine Papierfasern im Inneren des Perforationsspalts 5a stehengeblieben sind.

Das Detektorsignal S wird der Auswerteeinrichtung 4 zugeführt, die die beiden charakteristischen Größen $t_S$ und $h_S$ aus dem Verlauf des Detektorsignals bestimmt und die Perforationsfestigkeit bzw. eine dazu korrespondierende Größe bestimmt. Dazu werden Vorgaben für die Signaldauer $t_{Ssoll}$ bzw. die Breite $b_{Psoll}$ des Perforationsspalts und für den Signalhub $h_{Ssoll}$ gemacht, die einer bestimmten, vorgegebenen Perforationsfestigkeit entsprechen. Diese Vorgaben können für verschiedene Papiersorten mit Hilfe der bekannten Möglichkeiten und Methoden und für die Meßvorrichtung durch geeignete Kalibrierung in Bezug auf den maximalen Signalhub $h_{max}$ in Form einfacher Versuchsreihen bestimmt werden und stehen anschließend etwa in Form einer Tabelle zur Verfügung. Die Auswerteeinrichtung 4 führt in wesentichen einen Vergleich der jeweils erfaßten Werte $t_S$ und $h_S$ mit diesen Vorgaben durch und bestimmt die momentane Perforationsfestigkeit PF oder die dazu korrespondierende Größe als Funktion der beiden momentanen Werte $t_S$ und $h_S$ ($PF = f(t_s, h_s)$) bzw. der beiden momentanen Werte $b_P$ und $h_S$ ($PF = f(b_P, h_S)$) unter Anwendung der im folgenden beschriebenen Grundsätze.

Ist die momentane Signaldauer $t_S$ größer als die Vorgabe $t_{Ssoll}$ ($t_S > t_{Ssoll}$), dann ist die Perforationsfestigkeit PF kleiner als der vorgegebene Wert. Denn die vorhandene Bahnspannung dehnt die Perforation stärker als durch den Sollwert vorgegeben. Eine Verkleinerung des Schnitt/Steg-Verhältnisses kann hier Abhilfe schaffen.

Ist die momentane Signaldauer $t_S$ kleiner als die Vorgabe $t_{Ssoll}$ ($t_S < t_{Ssoll}$), so ist die Perforationsfestigkeit PF der Perforation größer als der vorgegebene Wert. Dies bedeutet, daß das Papier der Bahnspannung einen größeren Widerstand entgegensetzt und nicht so weit gedehnt wird, wie durch den Sollwert vorgegeben ist. Über eine Vergrößerung des Schnitt/Steg-Verhältnisses kann die Perforationsfestigkeit angepaßt werden.

Die Vergleiche sollten vorteilhaft mit Hilfe des Wertes der Breite $b_P$ und der Vorgabe $b_{Psoll}$ durchgeführt werden, wenn von einer konstanten Bewegungsgeschwindigkeit $V_E$ der Endlosforumulare nicht ausgegangen werden kann. Der Auswerteeinrichtung 4 wird dann neben dem Detektorsignal S ein der Bewegungsgeschwindigkeit $V_E$ der Endlosformulare 5 entsprechedes Meßsignal zugeführt, das von einer geeigneten Meßeinrichtung abgegeben wird. Die Auswerteeinrichtung 4 bestimmt dann den Wert $b_P$ mit Hilfe der Beziehung $b_P = t_S \times V_E$.

Ist der momentane Signalhub $h_S$ größer oder gleich der Vorgabe $h_{Ssoll}$ ($h_s >= h_{Ssoll}$), dann wird die Perforationsfestigkeit nicht durch im Perforationsspalt stehengebliebene Papierfasern beeinflußt. Ist der momentane Signalhub $h_s$ kleiner als die Vorgabe $h_{Ssoll}$ ($h_S < h_{Ssoll}$), dann weist dies auf die Perforationsfestigkeit beeinflußende Papierfasern im Perforationsspalt hin.

Die zuvor erwähnten Vorgabentabellen für $t_{Ssoll}$ und $h_{Ssoll}$ können in die Auswerteeinrichtung 4 vor Beginn der Herstellung der Endlosformulare von Hand eingegeben werden; die Auswerteeinrichtung 4 ist dazu vorteilhaft mit einer Eingabeeinheit ausgestattet, die auch eine Anzeige und Änderung der Vorgaben ermöglicht. Die eingegebenen Werte der Vorgabentabelle werden in einer bevorzugten Ausführungsform der Auswerteeinrichtung 4 in einer Speichereinheit abgespeichert, von wo sie auf einfache Weise abgerufen werden können, ohne jedesmal erneut eingegeben werden zu müssen.

Ferner umfaßt die Auswerteeinrichtung 4 in einer vorteilhaften Ausgestaltung eine Speichereinheit zur Abspeicherung der jeweils bestimmten Perforationsfestigkeit und eine Ausgabeeinheit, über die diese Werte oder nur die nicht in einen vorgegebenen Bereich fallenden Werte nach Abschluß der Herstellung eines Endlosformular-Produktionsvolumens ausgegeben werden können.

Das erfindungsgemäße Verfahren zur Herstellung von materialangepaßt perforierten Endlosformularen umfaßt im wesentlichen die Schritte des Einbringens der Querperforationen in die Papierbahn, der kontinuierlichen Messung der Perforationsfestigkeit der eingebrachten Querperforationen und des Anpassens der einzubringenden Querperforationen derart, daß der Variationskoeffizient unter einem Grenzwert, vorzugsweise unter 6% liegt.

Im Einzelnen umfaßt eine Ausgestaltung des erfindungsgemäßen Verfahrens die Schritte des Einbringens der Querperforation in die Papierbahn, des Erfassens einer Größe ($t_S$, $b_P$), die zu der Perforationsfestigkeit der Perforation korrespondiert, für jede Querperforation, des Vergleichs der erfaßten Größe mit einem vorgegebenen Grenzwert ($t_{Ssoll}$, $b_{psoll}$) und des Anpassens der einzubringenden Querperforationen mittels einer Veränderung des Schnitt/Steg-Verhältnisses.

Das Erfassen der zur Perforationsfestigkeit korrespondierenden Größe erfolgt durch die Schritte des Einstrahlens eines Lichtstrahls, vorzugsweise eines Laser-Lichtstrahls auf die Papierbahn derart, daß der Lichtstrahl durch die Perforationsspalte der bewegten Papierbahn hindurchtritt, des Erfassens des Lichtstrahls mittels einer Detektorvorrichtung und des Auswertens des von der Detektorvorrihtung abgegebenen Signals im Hinblick auf die zur Perforatioansfestigkeit korrespondierenden Größe ($t_S$, $b_p$). Dabei wird als zur Perforationsfestigkeit korrespondierende Größe die Dauer ($t_S$) des Detektorsignals, vorzugsweise die Perforationsspaltbreite ($b_p$) herangezogen.

In einer weiteren Ausgestaltung umfaßt das erfindungsgemäße Verfahren den Schritt des Erfassen einer Größe ($h_S$), die zur Güte der Perforation korrespondiert und die Perforationsfestigkeit beeinflußt, für jede Querperforation und des Vergleichs der erfaßten Größe mit einem vorgegebenen Grenzwert ($h_{Ssoll}$).

Das Erfassen der zur Güte der Perforation korrespondierenden Größe erfolgt durch die Schritte des Einstrahlens eines Lichtstrahls, vorzugsweise eines Laser-Lichtstrahls auf die Papierbahn derart, daß der Lichtstrahl durch die Perforationsspalte der bewegten Papierbahn hindurchtritt, des Erfassens des Lilchtstrahls mittels einer Detektorvorrichtung und des Auswertens des von der Detektorvorrichtung abgegebenen Signals im Hinblick auf die zur Güte der Perforation korrespondierenden Größe ($h_S$). Dabei wird als zur Güte der Perforation korrespondierende Größe der Signalhub ($h_S$) des Detektorsignals herangezogen.

Durch das erfindungsgemäße Verfahren zur Herstellung von Endlosformularen ist erstmalig eine Möglichkeit geschaffen worden, Endlosformulare mit materialangepaßter Perforation und damit mit nahezu konstanter Perforationsfestigkeit herauszustellen, so daß für ein ganzes Produktionsvolumen die Einhaltung der Vorgaben an die Perforationsfestigkeit garantiert werden kann. Diese Qualität war bislang nicht möglich und stellt einen erheblichen Fortschritt gegenüber den bisher bekannten Methoden zur Herstellung von Endlosformularen dar.

Die Messung der beiden charakteristischen Größen $h_S$ und $t_S$ kann während der Herstellung der Endlosformulare kontinuierlich und zerstörungsfrei durchgeführt werden, ohne daß die Produktion unterbrochen oder auf eine stichprobenartige Messung zurückgegriffen werden muß. Vielmehr wird jeder einzelne Perforationsspalt erfaßt und auf die erzielte Perforationsfestigkeit hin überprüft, sodaß eine Aussage über die bei der Produktion der Endlosformulare tatsächlich erzielte Perforationsfestigkeit möglich ist.

Durch die Meßvorrichtung kann die Einhaltung von Vorgaben für die Perforationsfestigkeit bereits dadurch beeinflußt und teilweise auch gewährleistet werden, daß aufgrund der Meßergebnisse eine wiederholte Einstellung der Perforationsvorrichtung vorgenommen bzw. eine Nachstellung bei verschleißbedingten Veränderungen durchgeführt wird. Dabei ist aber die Herstellung der Endlosformualre zu unterbrechen bzw. das Ende einer Produktionsvorganges abzuwarten.

Jedoch wird durch die Meßvorrichtung eine Möglichkeit geschaffen, die Perforationsfestigkeit von Endlosformularen kontinuierlich zu regeln, da die Messung der Perforationsfestigkeit gemäß der Erfindung kontinuierlich und zerstörungsfrei, sowie unter Einbeziehung der Materialeigenschaften des Papiers erfolgt. Die charakteristischen Größen $t_S$ bzw. $b_P$ und $h_S$ können in einen Regelkreis zur Regelung der Perforationsfestigkeit einbezogen werden, wie im folgenden ausführlich beschrieben wird. Auf diese Weise wird eine Perforation erzeugt, die an die Eigenschaften des verwendeten Papiers angepaßt ist.

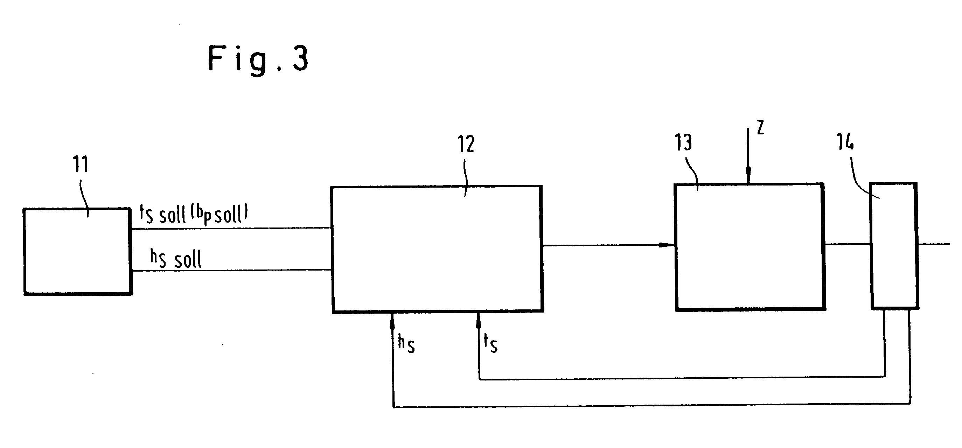

In Fig. 3 ist schematisch ein derartiger Regelkreis dargestellt, dem als Ist-Werte die charakteristischen Größen $t_S$ und $h_S$ zugeführt werden. Der Regelkreis umfaßt eine Sollwertvorgabe 11, über die die Vorgaben für die Signaldauer $t_{Ssoll}$ bzw. die Breite $b_{Psoll}$ und den Signalhub $h_{Ssoll}$ dem Regelkreis zugeführt werden, einen Regler 12, über den Einfluß auf die Einbringung der Perforation ausgeübt wird, und die Regelstrecke 13, auf die neben dem Regler 12 auch Störeinflüsse Z , etwa schwankende Papiereigenschaften einwirken. Hinter der Regelstrecke 13 ist als Ist-Wertgeber 14 die oben beschriebene Meßvorrichtung angeordnet Die Meßwerte $t_S$ und $h_S$ werden zur Sollwertvorgabe 11 rückgeführt, wodurch der Regelkreis geschlossen wird.

Die Regelstrecke 13 ist herkömmlicherweise eine Perforationsvorrichtung mit Messerwalzen zur Einbringung der Perforation. Der Messerwalze ist ein Gegendruckzylinder achsenparallel zur Messerwalze zugeordnet; der Druck zwischen den beiden beeinflußt maßgeblich die Güte der Durchtrennung des Papiers, d.h. den Signalhub $h_S$ des Meßsignals. Wird als Stellglied eine Vorrichtung zur Veränderung des Drucks zwischen Messerwalze und Gegendruckzylinder vorgesehen und die Veränderung auf der Grundlage der Differenz zwischen Vorgabe $h_{Ssoll}$ und Meßwert $h_S$ durchgeführt, kann der Einfluß von Papierfasern auf die Perforationsfestigkeit vermieden werden. Jedoch sind diesem Vorgehen bei herkömmlichen Perforationsvorrichtungen mit Messerwalzen Grenzen gesetzt, da die mangelnde Durchtrennung der Papierfasern bei herkömmlichen Perforationsverfahren auch auf abgenutzte Perforationsmesser zurückgehen kann. Eine sinnvolle Korrektur ist dann nicht mehr möglich; vielmehr ist ein Austausch der Messerwalze bzw. eine erneute Grundeinstellung der Perforationsvorrichtung erforderlich, wenn der Meßwert $h_S$ zu stark von der Vorgabe abweicht. Mit Hilfe der erfindungsgemäßen Meßvorrichtung kann aber auf einen abgenutzten Zustand der Messer rechtzeitig hingewiesen werden, da die charakteristische Größe $h_S$ kontinuierlich erfaßt wird.

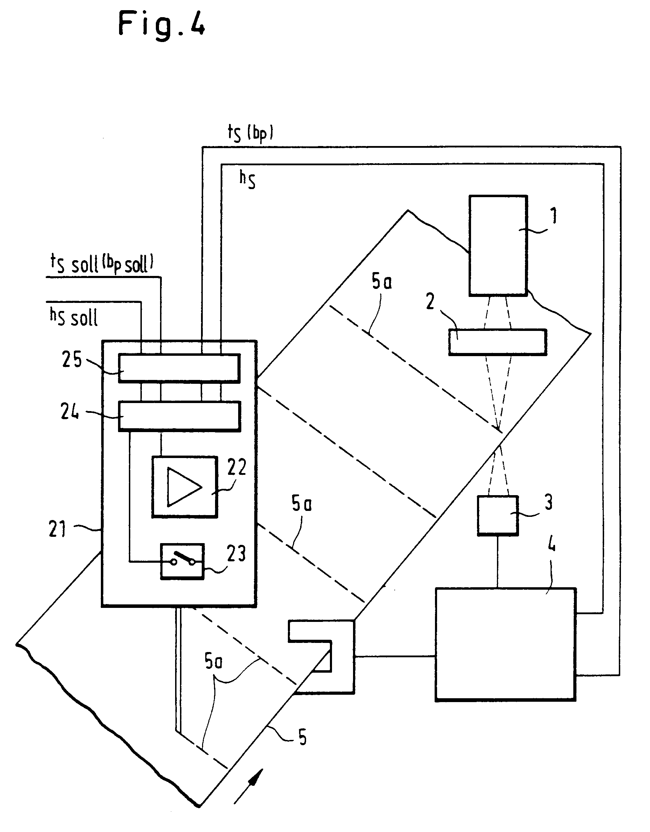

Im folgenden wird ausführlich ein Beispiel einer besonders geeigneten Vorrichtung zur Herstellung von Endlosformularen auf der Grundlage einer Laser-Perforationsvorrichtung unter Bezugnahme auf Fig. 4 beschrieben. In Fig. 4 ist eine Laser-Perforationsvorrichtung gezeigt, die eine Laserlichtquelle 21 umfaßt, von der ein das Papier schneidender Laserstrahl ausgeht, der vorzugsweise senkrecht auf die Papierbahn der Endlosformulare 5 auftrifft, um die Perforationsschnitte 5a einzubringen. In der Laserlichtquelle 21 ist eine Einrichtung 22 zur Beeinflussung der von der Laserlichtquelle abgegebenen Leistung vorgesehen. Ferner weist die Laserlichtquelle eine Einrichtung 23 zur Veränderung des Schnitt/Steg-Verhältnisses der Perforation auf. Dabei handelt es sich im einfachsten Fall um eine Schalteinrichtung, die den Laserstrahl entsprechend dem gewünschten Schnitt/Steg-Verhältnis ein- bzw. ausschaltet. Ferner umfaßt die Laserlichtquelle 21 neben einer Regeleinrichtung 24 auch eine Schnittstelle 25, über die die beiden Meßwerte $t_S$ bzw. $b_P$ und $h_S$ zugeführt werden. Über die Schnittstelle 25 werden auch die Vorgaben für die Signaldauer $t_{Ssoll}$ bzw. $b_{Psoll}$ und $h_{Ssoll}$ zugeführt und gelangen zur Regeleinrichtung 24, die auf der Grundlage dieser Werte die Einbringung der Perforation 5a im Hinblick auf eine bestimmte Perforationsfestigkeit regelt.

Einerseits wird die Laserleistung, die von der Laserlichtquelle 21 abgegeben wird, in Abhängigkeit von der Differenz zwischen der Sollwertvorgabe $h_{Ssoll}$ und dem Meßwert $h_S$ bestimmt. Denn eine mangelhafte Durchtrennung der Papierfasern im Perforationsspalt kann durch eine Erhöhung der Laserleistung vermieden werden. Die Einrichtung 22 zur Beeinflussung der Laserleistung wird von der Regeleinrichtung 24 entsprechend angesteuert, um eine verbesserte Durchtrennung der Papierfasern zu bewirken. Dadurch wird erfindungsgemäß die Perforationsfestigkeit in Bezug auf den Einfluß von im Perforationsspalt verbleibender Papierfasern ausgeregelt. Vorteilhaft wird versucht, die Laserleistung so gering wie möglich zu halten.

Eine verbesserte Durchtrennung ist aber auch zu erreichen, wenn die Papierbahn der Endlosformulare 5 exakt in die Brennebene des Laserstrahls gebracht bzw. dort gehalten wird. Da Laser-Perforationsvorrichtungen in der Regel mit einer Fokussiereinrichtung für den Laserstrahl ausgestattet sind, kann ebenso gegebenenfalls eine Nachführung der Fokussierung vorgesehen werden. Sowohl die Veränderung der Laserleistung als auch die Nachführung der Fokussierung sind Maßnahmen, die automatisiert durchgeführt werden können, so daß auf einfache Weise die Perforationsfestigkeit bezüglich der charakteristischen Größe $h_S$, d.h. hinsichtlich der Qualität der Durchtrennung der Papierfasern im Perforationsspalt im Bereich der Vorgabe $h_{Ssoll}$ gehalten werden kann.

Andererseits wird das Schnitt/Steg-Verhältnis der Perforation in Abhängigkeit von der Differenz zwischen der Sollwertvorgabe $t_{Ssoll}$ und dem Meßwert $t_S$ bzw. $b_{Psoll}$ und $b_P$ festgelegt. Dazu wird die Einrichtung 23 zur Veränderung des Schnitt/Steg-Verhältnisses entsprechend derart angesteuert, daß eine zur starke bzw. zu geringe Schwächung des tragenden Papierquerschnitts ausgeglichen wird, der sich durch zu große oder zu kleine Abstände der Flanken des Detektorsignals bemerkbar macht. Denn durch eine geeignete Erhöhung des Schnitt/Steg-Verhältnisses zugunsten des Schnittanteils kann die Perforationsfestigkeit, die aufgrund einer zu geringen Breite $b_P$ des Perforationsspalts als erhöht erkannt wird, auf den gewünschten Wert ausgeregelt werden. Dabei ist zu berücksichtigen, daß sich die Papiereigenschaften innerhalb einer Papierbahn nur sehr langsam verändern, so daß Schwankungen der Papiereigenschaften, die zu einer Vergrößerung bzw. Verkleinerung der Perforationsspaltbreite $b_P$ führen, ohne Schwierigkeiten ermittelt und in eine entsprechende Regelung einbezogen werden können. Der langsame Verlauf der Änderungen in den Papiereigenschaften erlaubt eine Bestimmung des Schnitt/Steg-Verhältnisses einer noch einzubringenden Querperforation auf der Grundlage der Messung einer zuvor eingebrachten Querperforation.

Mit Hilfe der anhand von Fig. 4 beschriebenen Vorrichtung können Endlosformulare hergestellt werden, deren Perforation materialangepaßt ist. Durch die Regelung wird erreicht, daß Schwankungen der Papiereigenschaften durch eine entsprechende Anpassung der Perforationsausbildung ausgeglichen werden. Die Perforationsfestigkeit streut daher weniger, als es aufgrund der schwankenden Papiereigenschaften zu erwarten wäre. Dabei stützt sich die Regelung auf eine vollständige und zerstörungsfreie Erfassung der Perforationsfestigkeit und führt zu einer materialangepaßten Perforation der Papierbahn.

Gegenüber dem bisher bekannten Endlosformularen zeichnen sich die Endlosformulare mit materialangepaßter Perforation somit dadurch aus, daß eine Einhaltung der Spezifikation und der damit verbundenen Anforderungen an die Endlosformulare hinsichtlich der Weiterverarbeitung in Bearbeitungsanlagen, wie z.B. EDV-Druckern mit Sicherheit feststeht. Bislang erfolgte für die Erfüllung der an die Endlosformulare gestellten Anforderungen keine auf einer Überprüfung basierende Regelung, so daß nur weite Bereichsgrenzen für die Perforation zuverlässig realisierbar waren. Durch die materialangepaßt perforierten Endlosformulare, bei denen der Variationskoeffizient, d.h. die Abweichung der Perforationsfestigkeit von einem Mittelwert unter einem Grenzwert, vorzugsweise unter 6% liegt, werden erhebliche Vorteile in Hinblick auf deren Zuverlässigkeit und Einsetzbarkeit erreicht.

## Patentansprüche

1. Endlosformulare, bedruckt oder unbedruckt, mit zumindest Querperforationen, die als Abtrenn- und/oder Falzperforation dienen,
   dadurch **gekennzeichnet**, daß
   die Endlosformulare Querperforationen (5a) mit einem derart gezielt variierenden Schnitt-/Steg-Verhältnis aufweisen, daß der Variationskoeffizient der Perforationsfestigkeit unter einem vorgegebenen Grenzwert, vorzugsweise unter 6% liegt.

2. Endlosformulare nach Anspruch 1,
   dadurch **gekennzeichnet**, daß
   der Variationskoeffizient der Perforationsfestigkeit unter 4% liegt.

3. Endlosformulare nach einem der Ansprüche 1 oder 2,
   dadurch **gekennzeichnet**, daß
   sich die Breite ($b_p$) der Perforationsspalte, die sich unter einer bestimmten Bahnspannung im Bereich der Querperforationen (5a) ausbilden, von einem Wert ($b_{psoll}$), der der vorgegebenen Perforationsfestigkeit entspricht, nur um einen Betrag abweicht, der dem Grenzwert des Variationskoeffizienten der Perforationsfestigkeit entspricht.

4. Endlosformulare nach einem der Ansprüche 1, 2 oder 3,
   dadurch **gekennzeichnet**, daß
   die Güte ($h_S$) der Perforation stets größer oder gleich einem vorgegebenen Grenzwert ($h_{SSoll}$) ist.

5. Verfahren zur Herstellung von Endlosformularen, bedruckt oder unbedruckt, mit zumindest Querperforationen, die als Abtrenn- und/oder Falzperforationen dienen, mit folgenden Schritten:
   Einbringen von Querperforationen (5a) in eine Papierbahn (5),
   Einstrahlen eines Lichtstrahls, vorzugsweise eines Laser-Lichtstrahls auf die Papierbahn (5) derart, daß der Lichtstrahl durch die Perforationsspalte der bewegten Papierbahn (5) in Abhängigkeit von der Bewegung hindurchtritt,
   Erfassen des Lichtstrahls mittels einer Detektorvorrichtung (3),
   Auswerten eines von der Detektorvorrichtung (3) abgegebenen Signals im Hinblick auf die Dauer ($t_S$) des Detektorsignals und
   Anpassen der das Schnitt-/Steg-Verhältnis bestimmenden Einstellung der die Querperforationen (5a) einbringenden Perforationsvorrichtung in Abhängigkeit von der Signalauswertung, derart, daß die Querperforationen ein derart variierendes Schnitt-/Steg-Verhältnis aufweisen, daß der Variationskoeffizient der Perforationsfestigkeit unter einem vorgegebenen Grenzwert, vorzugsweise 6% liegt.

6. Verfahren nach Anspruch 5,
**gekennzeichnet** durch die folgenden Schritte:
Erfassen der zu der Perforationsfestigkeit korrespondierenden Größe ($t_S$, $b_P$) für jede der Querperforationen (5a),
Vergleichen der jeweils erfaßten Größe mit einem vorgegebenen Grenzwert ($t_{Ssoll}$, $b_{psoll}$).

7. Verfahren nach Anspruch 6,
**gekennzeichnet** durch die folgenden Schritte:
Erfassen der Geschwindigkeit ($V_E$) der bewegten Papierbahn (5), und
Auswerten eines von der Detektorvorrichtung (3) abgegebenen Signals im Hinblick auf die Perforationsspaltbreite ($b_p$).

8. Verfahren nach einem der Ansprüche 5 bis 7,
**gekennzeichnet** durch die Schritte:
Erfassen einer Größe ($h_S$), die zur Güte der Perforation korrespondiert und die Perforationsfestigkeit beeinflußt, für jede der Querperforationen (5a), und
Vergleich der jeweils erfaßten Größe mit einem vorgegebenen Grenzwert ($h_{Ssoll}$).

9. Verfahren nach Anspruch 8,
dadurch **gekennzeichnet**, daß
das Erfassen der zur Güte der Perforation (5a) korrespondierenden Größe erfolgt durch die folgenden Schritte:
Einstrahlen eines Lichtstrahls, vorzugsweise eines Laser-Lichtstrahls auf die Papierbahn (5) derart, daß der Lichtstrahl durch die Perforationsspalte der bewegten Papierbahn (5) in Abhängigkeit von der Bewegung hindurchtritt,
Erfassen des Lichtstrahls mittels einer Detektorvorrichtung (3), und
Auswerten eines von der Detektorvorrichtung (3) abgegeben Signals im Hinblick auf den Signalhub ($h_S$) des Detektorsignals.

**Claims**

1. Endless forms, printed or unprinted, with at least transverse perforations which serve as separating and/or folding perforation, characterised in that the endless forms comprise transverse perforations (5a) with a cut-to-web ratio varying selectively in such a way that the coefficient of variation of the perforation strength is below a predetermined limit value, preferably below 6%.

2. Endless forms according to claim 1, characterised in that the coefficient of variation of the perforation strength is below 4%.

3. Endless forms according to either of claims 1 or 2, characterised in that the width (bP) of the perforation gaps which form in the region of the transverse perforations (5a) under a certain web tension differs from a value (bP nom) which corresponds to the predetermined perforation strength, only by an amount which corresponds to the limit value of the coefficient of variation of the perforation strength.

4. Endless forms according to any or claims 1, 2 or 3, characterised in that the quality (hS) of perforation is always greater than or equal to a predetermined limit value (hS nom).

5. Method for the manufacture of endless forms, printed or unprinted, with at least transverse perforations which serve as separating and/or folding perforation, with the following steps:
making transverse perforations (5a) in a paper web (5),
directing a light beam, preferably a laser light beam, onto the paper web (5) in such a way that the light beam passes through the perforation gap of the moving paper web (5) as a function of the movement,
detecting the light beam by means of a detector device (3), evaluating a signal transmitted by the detector device (3) with respect to the duration (tS) of the detector signal and adapting the setting of the perforating device making the transverse perforations (5a) - which setting determines the cut-to-web ratio - as a function of the signal evaluation, in such a way that the transverse perforations have a cut-to-web ratio varying in such a way that the coefficient of variation of the perforation strength is below a predetermined limit value, preferably below 6%.

6. Method according to claim 5, characterised by the following steps:
detecting the quantity (tS, bP) corresponding to the perforation strength for each of the transverse perforations (5a),
comparing the quantity detected at any given time with a predetermined limit value (tS nom, bP nom).

7. Method according to claim 6, characterised by the following steps:
detecting the speed (VE) of the moving paper web (5), and
evaluating a signal transmitted by the detector device (3) with respect to the perforation gap width (bP).

8. Method according to any of claims 5 to 7, characterised by the steps:
detecting a quantity (hS) which corresponds to the quality of perforation and affects the perforation strength, for each of the transverse perforations (5a), and;

comparing the quantity detected at any given time with a predetermined limit value (hS nom).

9. Method according to claim 8, characterised in that detection of the quantity corresponding to the quality of perforation (5a) takes place by the following steps: directing a light beam, preferably a laser light beam, onto the paper web (5) in such a way that the light beam passes through the perforation gap of the moving paper web (5) as a function of the movement, detecting the light beam by means of a detector device (3), and; evaluating a signal transmitted by the detector device (3) with respect to the signal height (hS) of the detector signal.

**Revendications**

1. Formulaires en continu, imprimés ou non imprimés, comportant au moins des perforations transversales, qui servent de perforations de séparation et/ou de pliage, caractérisés en ce que les formulaires en continu comportent des perforations transversales (5a) présentant un rapport coupes/intervalles entre coupes variant de manière visée et telle, que le coefficient de variation de la résistance de perforation se situe en-dessous d'une valeur limite prédéterminée, de préférence en-dessous de 6%.

2. Formulaires en continu, selon la revendication 1, caractérisés en ce que le coefficient de variation de la résistance de perforation se situe en-dessous de 4%.

3. Formulaires en continue, selon l'une des revendications 1 ou 2, caractérisés en ce que la largeur ($b_p$) des fentes de perforation, qui se forment, sous une tension de bande déteérminée, dans la zone des perforations transversales (5a), ne s'écarte d'une valeur ($b_{pcons}$), qui correspond à la résistance de perforation prédéterminée, que d'une quantité qui correspond à la valeur limite du coefficient de variation de la résistance de perforation.

4. Formulaires en continu, selon l'une des revendications 1, 2 ou 3, caractérisés en ce que la qualité ($h_s$) de la perforation est toujours supérieure ou égale à une valeur limite prédéterminée ($h_{scons}$).

5. Procédé de fabrication de formulaires en continu, imprimés ou non imprimés, comportant au moins des perforations transversales, qui servent de perforations de séparations et/ou de pliage, présentant les étapes suivantes: réalisation de perforations transversales (5a) dans une bande de papier (5), émission d'un rayon lumineux, de préférence un rayon lumineux laser, sur la bande de papier (5) de manière telle, que le rayon lumineux traverse la fente de perforation de la bande de papier (5) déplacée, en fonction de mouvement de déplacement, détection du rayon lumineux au moyen d'un dispositif de détecteur (3), traitement d'un signal délivré par le dispositif de détecteur (3), quant à la durée ($t_S$) du signal du détecteur, et adaption du réglage déteminant le rapport coupes/intervalles entre coupes, du dispositif de perforation réalisant les perforations transversales, en fonction du résultat de traitement du signal, de façon à ce que les perforations transversales présentent un rapport coupes/intervalles entre coupes variant de manière visée et telle, que le coefficient de variation de la résistance de perforation se situe en-dessous d'une valeur limite prédéterminée, de préférence en-dessous de 6%.

6. Procédé selon la revendication 5, caractérisé par les étapes suivantes: relevé de la grandeur ($t_s$, $b_p$) correspondant à la résistance de perforation, pour chacune des perforations transversales (5a), comparaison de chaque grandeur relevée, à une valeur limite prédéterminée ($t_{scons}$, $b_{pcons}$).

7. Procédé selon la revendication 6, caractérisé par les étapes suivantes: relevé de la vitesse ($v_E$) de la bande de papier (5) déplacée, traitement d'un signal délivré par le dispositif de détecteur (3), quant à la largeur de la fente de perforation ($b_p$).

8. Procédé selon la revendications 5 à 7, caractérisé par les étapes: relevé d'une grandeur ($h_s$) correspondant à la qualité de la perforation et influençant la résistance de perforation, pour chacune des perforations transversales (5a), et comparaison de chaque grandeur relevée à une valeur limite ($h_{scons}$) prédéterminée.

9. Procédé selon la revendication 8, caractérisé en ce que le relevé de la grandeur correspondant à la qualité de la perforation (5a) est effectué par les étapes suivantes: émission d'un rayon lumineux, de préférence un rayon lumineux laser sur la bande de papier (5), de manière telle, que le rayon lumineux traverse la fente de perforation de la bande de papier (5) déplacée, en fonction du mouvement de déplacement, détection du rayon lumineux au moyen d'un dispositif de détecteur (3), et traitement d'un signal délivré par le dispositif de détecteur (3), quant à l'amplitude de signal ($h_s$) du signal de détecteur.

# Fig.1

# Fig.2A

# Fig.2B

# Fig.2C

# Fig. 3

# Fig.4

$t_S$ (bp)

$h_S$

$t_S$ soll (b$_p$ soll)

$h_S$ soll

1

2

5a

25

24

22

21

23

5a

3

4

5a

5